# EUROPEAN PATENT SPECIFICATION

(11) **EP 3 028 212 B1**
(45) Date of publication and mention of the grant of the patent: **07.03.2018**
(21) Application number: 14832826.3
(22) Date of filing: 03.06.2014
(51) Int. Cl.: G06F 21/56

(54) **IRRELEVANT CODE IDENTIFICATION**
IDENTIFIZIERUNG IRRELEVANTER CODES
IDENTIFICATION DE CODE NON PERTINENT

(30) Priority: 29.07.2013 US 201313953608
(43) Date of publication of application: 08.06.2016
(73) Proprietor: Crowdstrike, Inc., Irvine CA 92618 (US)
(72) Inventor: GEFFNER, Jason, Austin, TX 78704 (US)
(74) Representative: Grünecker Patent- und Rechtsanwälte PartG mbB
(86) International application number: PCT/US2014/040748
(87) International publication number: WO 2015/017024

(56) References cited:
- US-A1- 2005 028 002
- US-A1- 2009 313 700
- US-A1- 2010 223 599
- US-A1- 2010 223 599
- US-A1- 2011 055 814
- US-A1- 2011 138 373
- DANILO BRUSCHI ET AL: "Code Normalization for Self-Mutating Malware", SECURITY & PRIVACY, IEEE, IEEE SERVICE CENTER, LOS ALAMITOS, CA, US, vol. 5, no. 2, 1 March 2007 (2007-03-01), pages 46-54, XP011175987, ISSN: 1540-7993, DOI: 10.1109/MSP.2007.31
- Christian Collberg ET AL: "A Taxonomy of Obfuscating Transformations", Computer Science Technical Reports 148, 31 December 1997 (1997-12-31), XP055340468, Retrieved from the Internet: URL:https://researchspace.auckland.ac.nz/b itstream/handle/2292/3491/TR148.pdf?sequen ce=2 [retrieved on 2017-01-31]

## Description

### PRIORITY APPLICATION

This patent application claims the benefit and priority to U.S. Utility patent application entitled "Irrelevant Code Identification" with Serial No. 13/953,608 filed on July 29, 2013, the entire disclosure of which is incorporated by reference herein.

### BACKGROUND

With computer and Internet use forming an ever greater part of day to day life, security exploits and cyber attacks directed to stealing and destroying computer resources, data, and private information are becoming an increasing problem. For example, "malware", or malicious software, is a general term used to refer to a variety of forms of hostile or intrusive computer programs. That is, malware is used by cyber attackers to disrupt computer operations, to access and to steal sensitive information stored on the computer or provided to the computer by a user, or to perform other actions that are harmful to the computer and/or to the user of the computer. Malware may include computer viruses, worms, trojan horses, ransomware, rootkits, keyloggers, spyware, adware, rogue security software and other malicious programs and malware may be formatted as executable files, dynamic link libraries (dlls), scripts, and/or other types of computer programs.

Government or private entities devote significant resources to prevent computer intrusions and thefts that result from the use of malware. For instance, a government or private entity may employ a security researcher to reverse engineer the code of a program and analyze the code to determine if the program is malware. If the program is determined to be malware or already known to be malware, the security researcher may be tasked with identifying one or more harmful actions the malware performs. Thus, the program may be converted to a high-level, human-readable language so the security researcher can view the code to determine if the program is malware and/or the harmful action the malware performs.

However, to distract or hamper the efforts of the security researcher, cyber attackers (e.g. hackers) intentionally insert irrelevant code (e.g., useless random numbers, illegitimate macros or other "junk" code) with legitimate code (e.g., the meaningful, or relevant, code that performs a harmful action) to obfuscate the code and disguise the legitimate code. Consequently, it is time consuming for the security researcher to determine if the program is malware and to determine the harmful actions the malware performs at least because the security researcher has to sift through a large amount of irrelevant code when attempting to analyze the legitimate code of the malware.

DANILO BRUSCHI ET AL, "Code Normalization for Self-Mutating Malware", SECURITY & PRIVACY, IEEE, IEEE SERVICE CENTER, LOS ALAMITOS, CA, US, (20070301) discloses a strategy based on code normalization that reduces different instances of the same malware into a common form that can enable accurate detection. The normalization process consists of a set of transformations that compilers adopt to optimize the code and improve its size. They all rely on the information collected during a static analysis phase (control flow and data-flow analysis) performed on the code at the beginning of the normalization process. Dead instructions are those whose results the program never uses. They are removed from a program because they don't contribute to the computation. Assignments are also classified as dead instructions when they define a variable but don't change its value. During spurious path pruning, dead paths arising from fake conditional jump instructions are pruned from the control flow to create new opportunities for transformation.

US 2010/223599 A1 discloses a method including accessing software comprising one or more inputs, one or more variables, and one or more segments of code that when executed operate on one or more of the inputs or one or more of the variables. The method includes, for every variable, determining whether the variable is relevant or irrelevant o a set of the inputs when expressed symbolically and, if the variable is relevant, incrementing the variable and every one of the segments of code associated with the variable. A segment of code is associated with the variable if the variable affects the segment of code when executed. A variable is relevant with respect to an input symbolic variable if the value of that variable is affected by changes in the value of the input variable. Otherwise the variable is irrelevant with respect to the symbolic variable..

It is the object of the present invention to provide an improved method and system for identifying irrelevant code.

The object is achieved by the subject matter of the independent claims.

Embodiments are defined by the dependent claims.

### BRIEF DESCRIPTION OF THE DRAWINGS

The detailed description is presented with reference to accompanying figures. In the figures, the left-most digit(s) of a reference number identifies the figure in which the reference number first appears. The use of the same reference numbers in different figures indicates similar or identical items.
FIG. 1 illustrates an example implementation of a deobfuscation module 102 that identifies legitimate code and/or irrelevant code.
FIG. 2 illustrates an example environment and components of a computing device that operates the deobfuscation module.
FIG. 3 illustrates an example process that disassembles and decompiles executable file(s) and determines legitimate code elements and irrelevant code elements.
FIG. 4 illustrates an example phase in a progression that identifies and/or labels legitimate code elements and/or irrelevant code elements.
FIG. 5 illustrates another example phase in a progression that identifies and/or labels legitimate code elements and/or irrelevant code elements.
FIG. 6 illustrates yet another example phase in a progression that identifies and/or labels legitimate code elements and/or irrelevant code elements.
FIG. 7 illustrates an example process that identifies and/or labels legitimate code elements and/or irrelevant code elements.
FIG. 8 illustrates an example process that determines whether a return statement is a legitimate code element or an irrelevant code element.

### DETAILED DESCRIPTION

The techniques described herein identify, and/or distinguish between, legitimate code and/or irrelevant code in programs so that an analyst does not have to spend additional time sifting through and/or considering the irrelevant code when analyzing the program. Therefore, the analyst (e.g., a security researcher) can be more efficient when determining whether a program is malware and/or when determining the harmful or deceptive actions the malware executes on a computer (e.g., deletion of a file, the targeting of sensitive information such as social security numbers or credit card numbers, etc.).

While the techniques described herein may refer to the analyst as a security researcher analyzing a program that may potentially be malware, it is understood that the techniques may also apply to other analysts that consider non-malicious software that includes code obfuscation (e.g., a program with legitimate code and semantically irrelevant or "junk" code). For example, a web server application may include code obfuscation to make it more difficult for an analyst to find security vulnerabilities in the code of the web server application. A digital video player may include code obfuscation to make it more difficult for an analyst to reverse engineer a video decoding process (DRM). A commercial software product may include code obfuscation to protect its serial number algorithm so that it is more difficult for a software pirate to generate registration numbers for free. A cryptographic software product may include code obfuscation to hide a cryptographic algorithm. Accordingly, the deobfuscation of code discussed herein may be used by anti-malware security researchers, white-hat vulnerability researchers, interoperability developers, anti-piracy testers or other analysts of obfuscated code.

In various embodiments, the techniques may identify the irrelevant code during a disassembly process and/or a decompiling process of a program. The techniques may then remove the irrelevant code from a visual representation of the code of the program to be output or presented to an analyst. The visual representation may be output in a human-readable format. In various embodiments, the techniques may replace a version of the program that includes the irrelevant code with a version of the program that does not include the irrelevant code and store the "junk-free" version in memory so that the program is able to execute more efficiently by not executing the irrelevant code (e.g., the removed code). Therefore, an analyst may view the code of the program without having to sift through the irrelevant code.

In some embodiments, the techniques may demarcate the irrelevant code from the legitimate code (e.g., different colors, highlighting, underlining, annotations, labeling, different text sizes, etc.) so the analyst can discern between relevant (e.g., meaningful, necessary) code that participates in (e.g., causes, enables, contributes to, etc.) the execution of a harmful action and the meaningless or unnecessary code that does not participate in the execution of a harmful action.

Accordingly, the techniques discussed herein clean-up the code of a program so that the analyst can focus his or her analysis on the legitimate code that causes or enables actions that may potentially harm a computer system. In contrast, the analyst may ignore the semantically irrelevant, or junk, code intended to disguise the legitimate code and hamper the efforts of the analyst. The techniques may further cause a program to execute more efficiently by removing the irrelevant code.

As discussed herein, an analyst may view individual portions of a computer program separately or the whole computer program. For example, the analyst may view and analyze individual functions from a plurality of functions that comprise the program. Depending on the programming language, portions of a program may also be referred to as procedures, routines, subroutines, subprograms, subqueries, etc. While functions are used for explanation purposes herein, it is understood in the context of this document that the techniques described may also be used in conjunction with any separable portions or units of a program that can individually be called upon internally within the program, by another external program, etc.

A program or a portion of the program (e.g., a function) may include multiple code "elements" that are separately identifiable pieces of code that may either be a legitimate code element or an irrelevant code element. Thus, a code element may include global and/or local variables (e.g., int, float, char and so forth), statements (e.g., assignment, call, goto, assertion, if-then, for loop, do loop, while loop, block, switch, and so forth), expressions, declarations or any other pieces of separately identifiable code in a program that a cyber attacker, hacker or other programmer can insert as an irrelevant code element and which is not required to perform a particular action (e.g., a harmful action of malware).

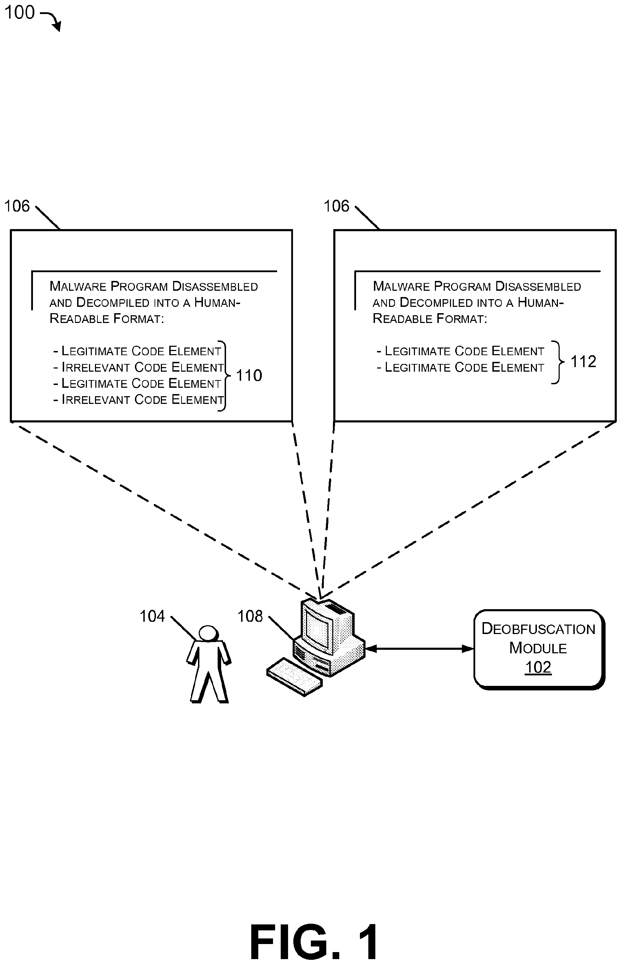

FIG. 1 illustrates an example overview 100 of a deobfuscation module 102 that identifies legitimate code and/or irrelevant code in a program (e.g., a malware program) and labels the legitimate code and/or irrelevant code so that an analyst 104 (e.g., a security researcher, a white-hat vulnerability researcher, an interoperability developer, an anti-piracy tester, etc.) does not have to expend extra effort analyzing and considering irrelevant code that does not contribute to, and is not associated with, actions performed by a program. In some instances, the deobfuscation module 102 may completely remove the irrelevant code from a human-readable visual representation of the code (e.g., textual output, control flow graph, etc.) provided to the analyst 104 via a presentation mechanism 106 of a computing device 108. In other instances, the deobfuscation module 102 may demarcate between legitimate code to be considered by the analyst 104 and the irrelevant code to be ignored by the analyst 104 (e.g., via color of text, size of text, highlighting, annotations and so forth). In further instances, the deobfuscation module 102 may remove irrelevant code from program and store the junk-free program in memory so that it is able to execute more efficiently. This may be done transparently such that a user does not view any of the changes to the code of the program (e.g., the removal of the irrelevant code).

Therefore, the deobfuscation module 102 executes on the computing device 108 which may be controlled and operated by the analyst 104 (e.g., locally or remotely). The computing device 108 may include, but is not limited to, any one of a variety of devices, such as a laptop computer, a desktop computer, a tablet computer, a portable computer, a smart phone, a mobile phone, a personal digital assistant (PDA), an electronic book device, a gaming console, a personal media player device, a server computer or any other electronic device that can receive a program and convert the binary code of the program to a human-readable format (e.g., a high-level programming language) so that the code can be output and viewed by the analyst 104 via the presentation mechanism 106 (e.g., a display screen, computer monitor, etc.).

As discussed above, analysts typically have to consider, line by line, hundreds of elements of code that may include irrelevant code interspersed between legitimate code, as shown by element 110. That is, cyber attackers and hackers obfuscate the code that executes the harmful actions of malware or other malicious programs by intentionally inserting irrelevant code to distract or hamper the analysis of the legitimate code by the analyst 104. The irrelevant code may also slow the execution speed of the program. Thus, the deobfuscation module 102 may be configured to determine that one or more elements of code in a program are likely legitimate code or irrelevant code so that the irrelevant code can be eliminated from consideration, as shown by element 112, for example.

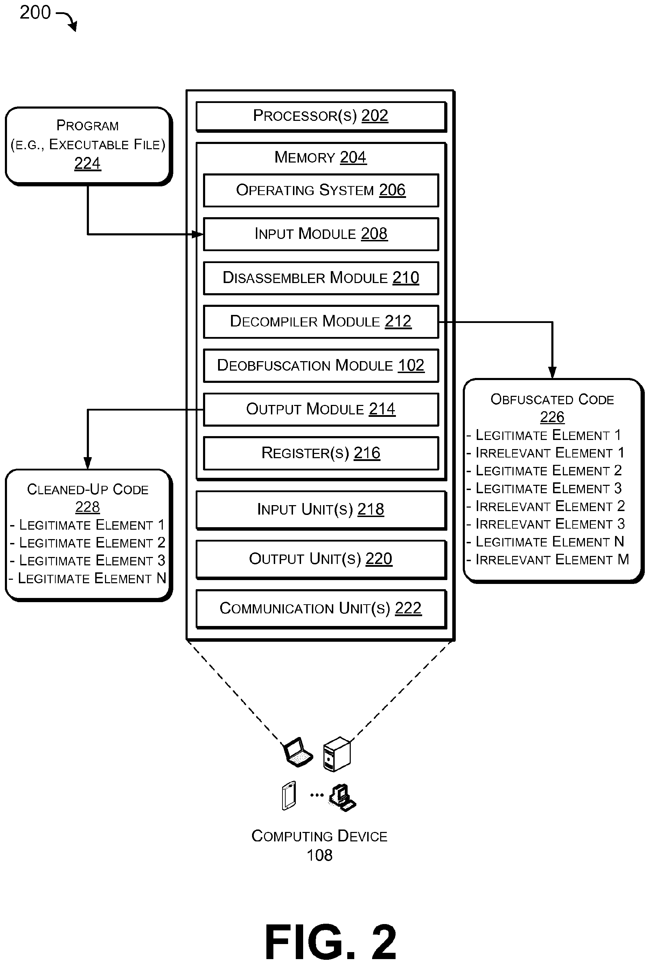

FIG. 2 illustrates an environment 200 that further describes components of the computing device 108 that operates the deobfuscation module 102.

The computing device 108 may include one or more processors 202 and memory 204. The processor(s) 202 may be a single processing unit or a number of units, each of which could include multiple different processing units. The processor(s) 202 may include a microprocessor, a microcomputer, a microcontroller, a digital signal processor, a central processing unit (CPU), a graphics processing unit (GPU), etc. Alternatively, or in addition, the techniques described herein can be performed, at least in part, by one or more hardware logic components. For example, and without limitation, illustrative types of hardware logic components that can be used include a Field-programmable Gate Array (FPGA), a Program-specific Integrated Circuit (ASIC), a Program-specific Standard Products (ASSP), a state machine, a Complex Programmable Logic Device (CPLD), other logic circuitry, a system on chip (SoC), and/or any other devices that manipulate signals based on operational instructions. Among other capabilities, the processor(s) 202 may be configured to fetch and/or execute computer-readable instructions and data stored in the memory 204.

The memory 204 may include one or a combination of computer-readable media. As used herein, "computer-readable media" includes computer storage media and communication media.

Computer storage media includes volatile and non-volatile, removable and non-removable media implemented in any method or technology for storage of information, such as computer-readable instructions, data structures, program modules, or other data. Computer storage media includes, but is not limited to, phase change memory (PRAM), static random-access memory (SRAM), dynamic random-access memory (DRAM), other types of random access memory (RAM), read only memory (ROM), electrically erasable programmable ROM (EEPROM), flash memory or other memory technology, compact disk ROM (CD-ROM), digital versatile disks (DVD) or other optical storage, magnetic cassettes, magnetic tape, magnetic disk storage or other magnetic storage devices, or any other medium that can be used to store information for access by a computing device.

In contrast, communication media may embody computer-readable instructions, data structures, program modules, or other data in a modulated data signal, such as a carrier wave. As defined herein, computer storage media does not include communication media.

The memory 204 includes an operating system 206 that is configured to manage hardware and services within and coupled to the computing device 108 for the benefit of other modules, components and devices (e.g., peripheral devices, remote devices, etc.). The memory 204 may also include one or more of an input module 208, a disassembler module 210, a decompiler module 212, the deobfuscation module 102, an output module 214 and one or more register(s) 216, each of which is further discussed herein.

As used herein, the term "module" is intended to represent example divisions of the software for purposes of discussion, and is not intended to represent any type of requirement or required method, manner or organization. Accordingly, while various "modules" are discussed, their functionality and/or similar functionality could be arranged differently (e.g., combined into a fewer number of modules, broken into a larger number of modules, etc.). Further, while certain functions and modules are described herein as being implemented by software and/or firmware executable on a processor, in other embodiments, any or all of the modules may be implemented in whole or in part by hardware (e.g., as an ASIC, a specialized processing unit, etc.) to execute the described functions. In some instances, the functionality and/or modules discussed herein may be implemented as part of the operating system 206. In other instances, the functionality and/or modules may be implemented as part of a device driver, firmware, and so on.

In various embodiments, the computing device 108 also includes input unit(s) 218 to receive input (e.g., a keyboard, a mouse, a microphone, a camera, sensors, etc.) from the analyst 104 and output unit(s) 220 to convey and/or visually present code (e.g., display screen, speakers, printer, etc.) to the analyst104. The computing device 104 may also include communication unit(s) 222 configured to establish a connection to one or more various networks, such as a local area network ("LAN"), a larger network such as a wide area network ("WAN"), a mobile telephone network (MTN), and/or a collection of networks, such as the Internet.

In various embodiments, the input module 208 is configured to receive, e.g., via communication unit(s) 222, a program 224 to be analyzed by the analyst 104 and/or executed on the computing device 108. The program 224 may comprise one or more executable files (e.g., .exe, .dll, etc.). The program 224 may be provided to the analyst 104 by a government agency or corporate entity tasked with providing a security service (e.g., identifying malware, preventing harmful actions of malware, etc.). In one embodiment, the program 224 may be provided to the computing device 108 and the analyst 104 so that the analyst 104 can determine if the program 224 is malware and if so, the harmful actions the malware performs. In other embodiments, the program 224 provided to the computing device 108 and the analyst 104 may already be known to be malware and the analyst 104 has the job of determining the harmful actions the malware performs (e.g., reverse engineering the code so that remedial actions can be implemented to prevent the harmful actions of the malware).

In various embodiments, the disassembler module 210 converts the binary code of the program 224 into an assembly language or a human-readable format (e.g., disassembled code or a low-level programming language). The disassembling of the binary code may be formatted for human-readability which helps the analyst 104 reverse engineer the program 224.

In various embodiments, the decompiler module 212 takes the disassembled code output by the disassembler module 210 and decompiles the disassembled code into a high-level programming language that the analyst 104 can better understand and analyze the code. As part of the decompiling process of the disassembled code, the decompiler module 212 may individually identify different portions (e.g., functions) of the program 224 and/or various inputs (e.g., arguments) to individual portions.

As discussed above, disassembled and decompiled code to be considered by analysts typically includes obfuscated code 226 that includes irrelevant code elements (e.g., code elements 1-*M* that do not participate in execution of the harmful or meaningful actions) interspersed with legitimate code elements (e.g., code elements 1-*N* that participate in execution of the harmful or meaningful actions). The obfuscated code 226 may include a large number of lines of legitimate code and/or irrelevant code (e.g., hundreds or thousands of lines) which may burden the analysis performed by the analyst 104 or any other person analyzing the obfuscated code 226.

Accordingly, the deobfuscation module 102 is configured to identify and/or internally label (e.g., mark, tag, etc.) individual elements of code as being either a legitimate code element to be considered by the analyst 104 or an irrelevant code element to be ignored by the analyst 104. The deobfuscation module 102 may be implemented as a module used within the decompiler module 212 or a module used in conjunction with the decompiler module 212. Moreover, the deobfuscation module 102 may be implemented as a module used within the disassembler module 210 or a module used in conjunction with the disassembler module 210. For example, the deobfuscation module 102 may be a programmable plug-in or add-on that supports the decompiler module 212 and/or the disassemble module 210. That is, a computer programmer may write code that comprises the deobfuscation module 102 and the code may interact with an internal representation of the code to identify, and distinguish between, legitimate code elements and irrelevant code elements.

In various embodiments, the output module 214 is configured to visually output a cleaned-up version of the code 228 that comprises the program 224 so that the analyst 104 can view the program 224 and determine whether the program 224 is a particular type of program (e.g., malware) and/or the actions the program performs when executed on computing devices (e.g., harmful actions executed by the malware). For example, the cleaned-up version of the code 228 may not include the irrelevant code elements identified by the deobfuscation module 102 (e.g., the irrelevant code elements are removed or hidden from the output). Consequently, the analyst 104 may be more efficient when performing the analysis because the analyst 104 does not have to view and sift through large amounts of irrelevant code. In another example, the cleaned-up version of the code 228 may demarcate the legitimate code and/or the irrelevant code so that the analyst 104 can view all the code that comprises the program 224, but the analyst 104 can easily distinguish between the legitimate code elements to be analyzed and the irrelevant code elements to be ignored as a result of the demarcation. In some instances, the output module 214 may output two versions of the code of the program, a first with the irrelevant code included but demarcated, and a second with the irrelevant code removed. Thus, the analyst 104 may be able to visualize the improvement and/or results of the functionality of the deobfuscation module 102.

In various embodiments, the output module 214 may output the cleaned-up version of the code 228 textually. In some embodiments, output module 214 may output the cleaned-up version of the code 228 as a control-flow graph. The disassembler module 210 and/or decompiler module 212 may include functionality to generate control flow graphs as a visual representation to show the flow of conditional statements.

In various embodiments, instead of or in addition to visually outputting the cleaned-up code 228, the deobfuscation module 102 may store the cleaned-up code 228 in a portion of the memory 204 so that it is able to execute more efficiently. This may be done transparently such that a user does not view any of the changes to the code of the program (e.g., the removal of the irrelevant code). In some instances, the deobfuscation module 102 may transmit, via communication unit(s) 222, the cleaned-up code 228 to a remote device so that it can be stored and/or executed remotely.

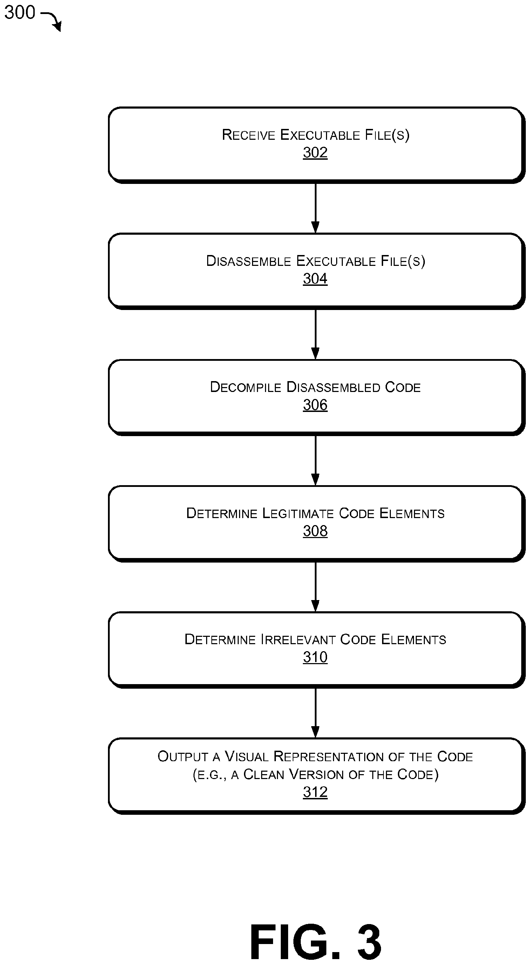

FIG. 3 illustrates an example process as a logical flow graph, which represents a sequence of operations that can be implemented in hardware, software, firmware, or a combination thereof. In the context of software, the operations represent computer-executable instructions that, when executed by one or more processors, perform the recited operations. Generally, computer-executable instructions include routines, programs, objects, components, data structures, and the like that perform particular functions or implement particular abstract data types. In some embodiments, any or all of the operations may be implemented in whole or in part by hardware (e.g., as an ASIC, a specialized processing unit, etc.) to execute the described functions.

The order in which the operations are described is not intended to be construed as a limitation, and any number of the described operations can be combined in any order and/or in parallel to implement the process. The example operations in FIG. 3 may be described with reference to the modules, components and/or elements illustrated in FIGS. 1-2.

FIG. 3 illustrates an example process 300 that receives a program 224 and converts the program 224 into a cleaned-up version of the code 228 that is visually output, in a human-readable format, to the analyst 104. The cleaned-up version of the code 228 may also be stored for execution.

At operation 302, the input module 208 receives one or more executable files comprising the program 224. In various embodiments, the program 224 may not be a known malware program, and thus, the program 224 may be provided to the computing device 108 for the analyst 104 to determine if the program 224 is malware and/or to identify the harmful actions the malware performs when executed. In other embodiments, the program 224 may already be known to be malware and the analyst 104 may be tasked with reverse engineering and analyzing the code of the program to identify the harmful actions malware performs when executed.

At operation 304, the disassembler module 210 disassembles the executable files received by the input module 208. That is, the disassembler module 210 converts the binary code of the executable files to a human-readable format (e.g. a low-level programming language).

At operation 306, the decompiler module 212 decompiles the disassembled code so that the code is converted into a high-level programming language that the analyst 104 can better understand and analyze the code (e.g., via textual output or a control flow graph).

At operation 308, the deobfuscation module 102 determines legitimate code elements. In various embodiments, the deobfuscation module 102 determines legitimate code elements by initially or automatically assuming that some code elements are legitimate code elements (e.g., a first or initial set of assumed legitimate code elements). For example, the deobfuscation module 102 may assume that one or more of the following are legitimate code elements: inputs to portions of the program (e.g., function arguments), global variables defined for the entire program, local function variables used as parameters to function calls, local function variables that store return values of function calls, and/or local function variables used in return statements.

In various embodiments, after the deobfuscation module 102 assumes a first or initial set of assumed legitimate code elements, the deobfuscation module 102 may determine that other code elements in the function that interact with the first or initial set are also legitimate code elements (e.g., code elements that have values read from or written to the assumed legitimate code elements). A code element interacting with another code element may also be referred to as tainting code elements or touching code elements.

At operation 310, the deobfuscation module 102 determines irrelevant code elements. In various embodiments, the deobfuscation module 102 determines the irrelevant code elements as those that are not determined to be legitimate. For example, after the deobfuscation module 102 identifies and/or labels the legitimate code elements, the remaining code elements may be determine to be irrelevant code and labeled accordingly.

In some embodiments, operations 308 and 310 discussed above may be performed as part of and/or in conjunction with the disassembling operation 304 and/or the decompiling operation 306.

At operation 312, the output module 214 presents a visual representation of the legitimate code of the program. In various embodiments, the visual representation does not include the irrelevant code elements (e.g., the output module 214 locates and removes labeled irrelevant code elements). In various embodiments, the visual representation demarcates the irrelevant code elements so an analyst 104 viewing the visual representation can distinguish between irrelevant code and legitimate code. For example, the output module 214 may perform a demarcation adjustment to the labeled irrelevant code elements and/or the labeled legitimate code elements (e.g., color of text, highlighting, annotation, marking, etc.).

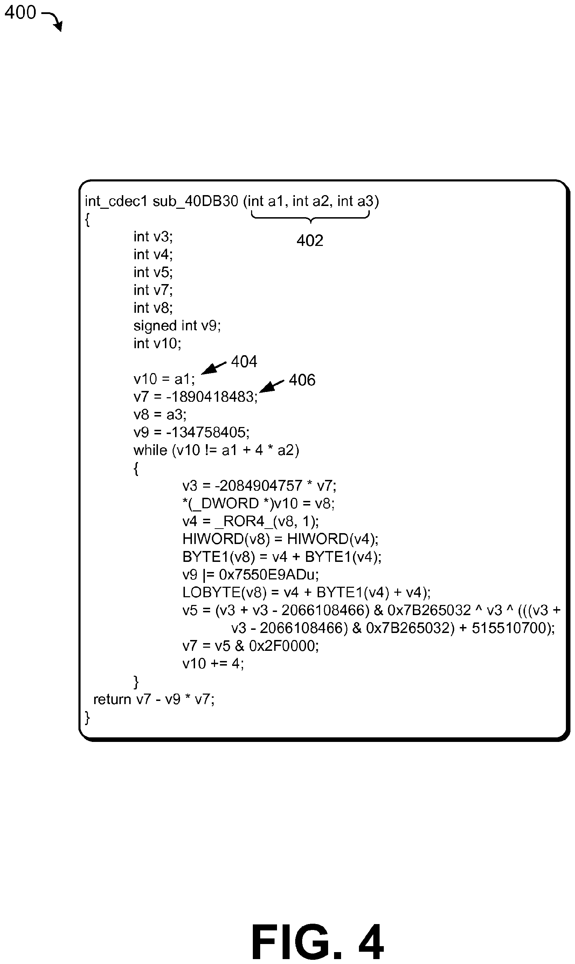

FIGS. 4-6 illustrate an example progression of the deobfuscation module 102 identifying and/or labeling legitimate code elements and/or irrelevant code elements in an example portion of a program (e.g., a function after disassembly and decompiling).

For instance, FIG. 4 illustrates an initial phase 400 in the progression. The function includes input code elements 402 or arguments (e.g., int a1, int a2, int a3). In this example, the deobfuscation module 102 assumes that the input code elements 402 are an initial set of legitimate code elements, and thus, any code elements that interact with one of the input code elements 402 is also legitimate, as illustrated by example element 404 (e.g., "v10 = a1"). In contrast, the deobfuscation module 102 may determine that other code elements that do not interact with a legitimate code element may be an irrelevant code element, as illustrated by example element 406 (e.g., a large random number inserted into the function).

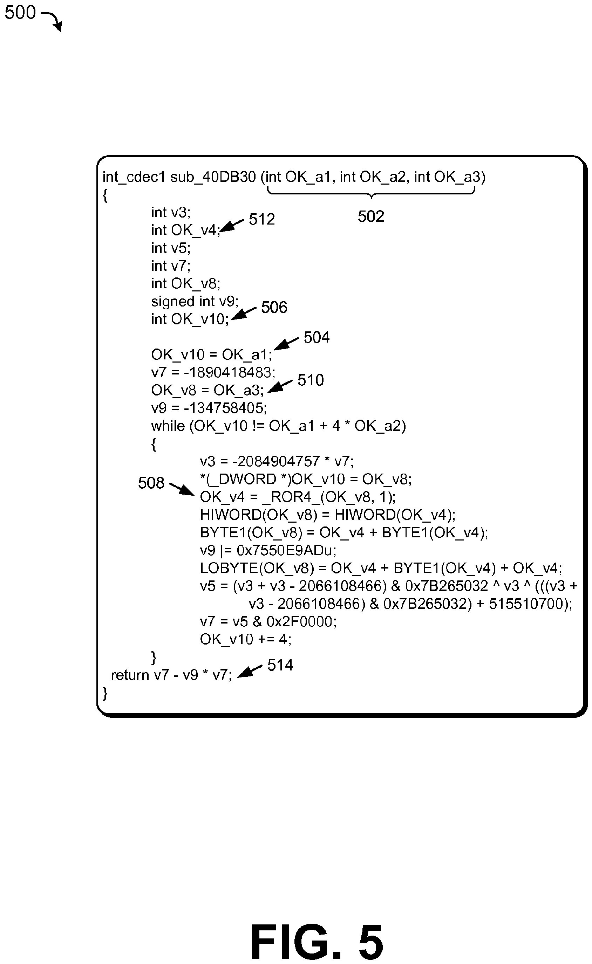

FIG. 5 illustrates an intermediate phase 500 in the progression. To help illustrate the identification and/or labeling of legitimate code elements, the term "OK" is used in FIG. 5. However, the context of this document contemplates other ways to internally or visually label (e.g., tag, mark, etc.) legitimate code elements and/or irrelevant code elements or to internally or visually distinguish between legitimate code elements and irrelevant code elements (e.g., other labels or designations, highlighting, color, text size, annotations, etc.).

As shown in FIG. 5, the input code elements 502 are initially assumed to be legitimate (e.g., labeled "OK"). Thus, based on the assumptions, the deobfuscation module 102 begins to evaluate each code element in the function to determine if the code element interacts with a legitimate code element (e.g., input code elements 502). For instance, example code element 504 shows that "v10" is OK because it interacts with "a1". It follows that the assignment or definition of v10 is also labeled as "OK" as shown at 506. Therefore, the deobfuscation module 102 may perform a first evaluation iteration to identify a second set of code elements that interact with the assumed legitimate code elements (e.g., input code elements 502).

Moreover, the deobfuscation module 102 may perform one or more subsequent evaluation iterations to identify subsequent groups of code elements that interact with recently identified legitimate code elements (e.g., code elements identified as legitimate in the previous iteration). For instance, example code element 508 shows that "v4" is "OK" because it interacts with "v8" which was identified as a legitimate code element based on its interaction with "a3" as shown at 510. It follows that the assignment or definition of "v4" is also labeled as "OK" as shown at 512.

Thus, the deobfuscation module 102 may perform multiple iterations to continue to identify code elements that interact with code elements labeled as legitimate until an evaluation iteration fails to reveal any further interactions (e.g., a final iteration).

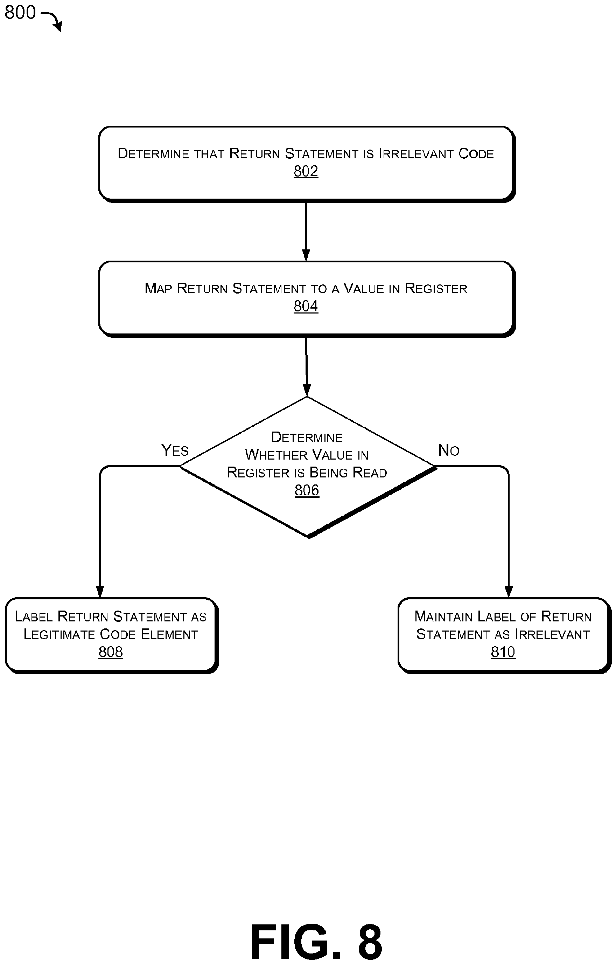

FIG. 5 further shows code element 514 which returns a value for the function. As seen by the labeling of legitimate code elements, the expression of code element 514 is not based on any legitimate code elements (e.g., the deobfuscation module 102 has not identified "v7" or "v9" as legitimate). Code element 514 may be considered an irrelevant code element or a legitimate code element as further discussed herein with respect to FIG. 8.

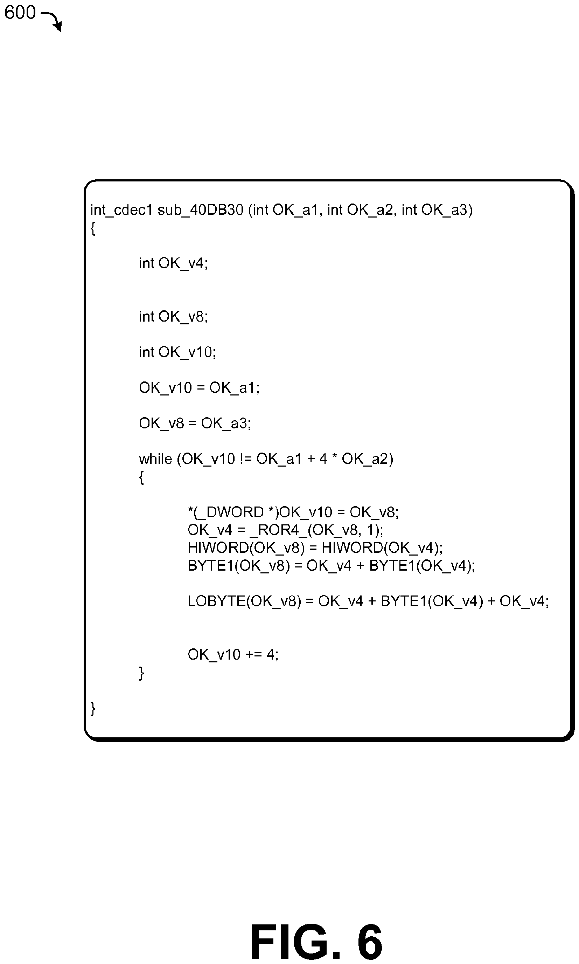

FIG. 6 illustrates a phase 600 where irrelevant code elements have been removed from the function or hidden from view. As shown, the code elements presented in FIG. 6 are each labeled as legitimate (e.g., the "OK" elements from FIG. 5). That is, the deobfuscation module 102 has determined that the code elements from FIG. 5 that are not labeled as legitimate are instead semantically irrelevant code elements. In some embodiments, the deobfuscation module 102 may label (e.g., mark, tag) the irrelevant code elements as irrelevant or junk similar to the use of "OK" in FIG. 5.

FIG. 6 is an example of a visual representation that may be output by the output module 214. As seen, the content in the function of FIG. 6 is easier for the analyst 104 to consider and understand compared to the content of the function of FIG. 4.

While the assumed legitimate code elements in FIGS 4-6 are input code elements, it is understood in the context of this document that the assumed legitimate code elements may also include one or more of global variables defined for the entire program, local function variables used as parameters to function calls, local function variables that store return values of function calls, and/or local function variables used in return statements.

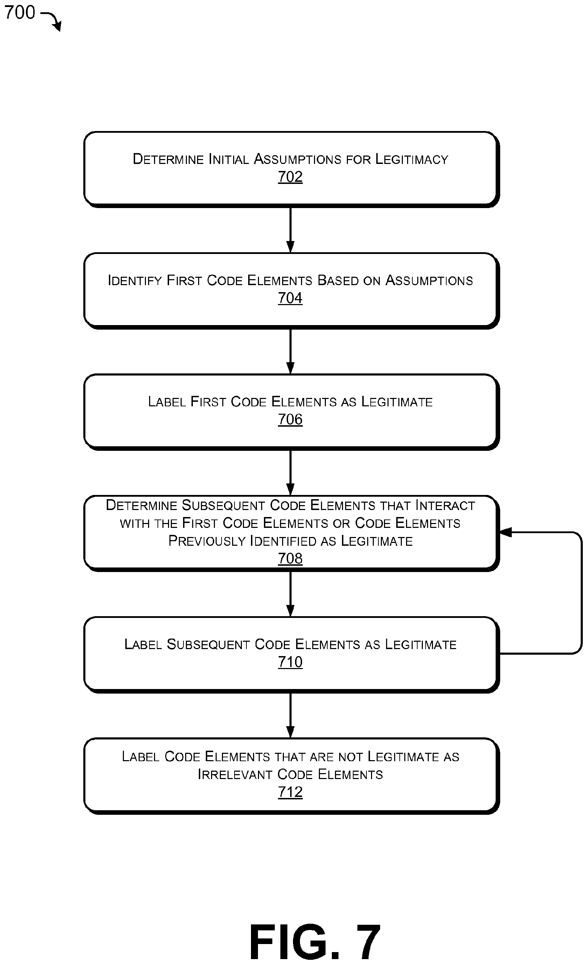

FIGS. 7-8 also illustrate example processes that are illustrated as logical flow graphs, which represent a sequence of operations that can be implemented in hardware, software, firmware, or a combination thereof. In the context of software, the operations represent computer-executable instructions that, when executed by one or more processors, perform the recited operations. Generally, computer-executable instructions include routines, programs, objects, components, data structures, and the like that perform particular functions or implement particular abstract data types. In some embodiments, any or all of the operations may be implemented in whole or in part by hardware (e.g., as an ASIC, a specialized processing unit, etc.) to execute the described functions. In some instances, the functions and/or modules are implemented as part of an operating system. In other instances, the functions and/or modules are implemented as part of a device driver (e.g., a driver for a touch surface), firmware, and so on.

The order in which the operations are described is not intended to be construed as a limitation, and any number of the described operations can be combined in any order and/or in parallel to implement the processes. The example operations in FIGS. 7-8 may be described with reference to the modules, components and/or elements illustrated in FIGS. 1-6.

FIG. 7 illustrates an example process 700 that identifies and/or labels legitimate code elements and/or irrelevant code elements. The example process 700 may be performed on one or more portions of executable files that comprise a program (e.g., malware, a web server application, a video decoding process, a commercial software product, a cryptographic software product, etc.).

At operation 702, the deobfuscation module 102 determines initial assumptions for legitimacy. For example, the deobfuscation module 102 may access settings defining that one or more of the following are assumed legitimate code elements: inputs to portions of a program (e.g., function arguments), global variables defined for the entire program, local function variables used as parameters to function calls, local function variables that store return values of function calls, and/or local function variables used in return statements.

At operation 704, the deobfuscation module 102 identifies an initial or first set of code elements for a portion of the program (e.g., a function) based on the assumptions. For example, the deobfuscation module 102 may identify input code elements 402.

At operation 706, the deobfuscation module 102 labels the first code elements as legitimate. For example, the deobfuscation module 102 may label the input code elements 502 as "OK".

At operation 708, the deobfuscation module 102 determines subsequent code elements that interact with the first code elements. For example, the deobfuscation module 102 may identify code elements 504 and 510 as code elements that interact with input code elements 502.

At operation 710, the deobfuscation module 102 labels the subsequent code element as legitimate. For example, the deobfuscation module 102 may label the code elements 504 and 510 as "OK". The example process then returns to operation 708 to perform another evaluation iteration. That is, the deobfuscation module 102 determines subsequent code elements that interact with the code elements identified as legitimate in the previous iteration. For example, the deobfuscation module 102 may identify code element 508 as a code element that interact with code element 510, identified as legitimate in the previous iteration.

In various embodiments, the deobfuscation module 102 continues to perform evaluation iterations until one fails to reveal an interaction between a code element and a legitimate code element.

At operation 712, the deobfuscation module 102 may then label remaining code elements as irrelevant code elements because they are not labeled as legitimate code elements.

There may be instances where the analyst 104 may want to view and/or consider the return statement or the return value even though the return statement is not based on legitimate code elements (e.g., element 514 in FIG. 5 is determined to be an irrelevant code element). Accordingly, the deobfuscation module 102 may implement a default setting that removes return statements that are irrelevant code elements from the output (e.g., a visual representation). The deobfuscation module 102 may also implement an alternative setting that may label an otherwise irrelevant return statement as legitimate so that it is presented to and analyzed by the analyst 104. This alternative setting may be applied in a scenario where the caller of the function uses a value returned by the return statement.

FIG. 8 illustrates an example process 800 that determines whether a return statement is a legitimate code element or an irrelevant code element.

At operation 802, the deobfuscation module 102 determines that the return statement in a function is an irrelevant code return statement (e.g., after implementing example process 700 the deobfuscation module 102 identifies and labels code element 514 as irrelevant).

At operation 804, the deobfuscation module 102 maps the return statement to a storage location in at least one of the register(s) 216 (e.g., EAX register, RAX register and so forth).

At decision operation 806, the deobfuscation module 102 determines whether or not the value in the identified storage location of the register is being read from the storage location. For example, based on a static disassembly of binary code, the deobfuscation module 102 can determine whether the value is being read from the storage location or solely being written to the storage location by the function.

If the answer at decision operation 806 is "Yes" (e.g., the value is being read), then at decision operation 808, the deobfuscation module 102 labels the return statement previously determined to be irrelevant as a legitimate code element (e.g., an override label). If the answer at decision operation 806 is "No" (e.g., the value is not being read and is only being written), then at operation 810, the deobfuscation module 102 maintains the label for the return statement as an irrelevant code element

In various embodiments, the deobfuscation module 102 may provide an override irrelevant label to a legitimate code element. For example, the deobfuscation module 102 may determine that a legitimate goto statement goes to (e.g., points, references, accesses) an irrelevant code element. Thus, the deobfuscation module 102 may label the goto statement as irrelevant and remove it from the output (e.g., the visual representation). In some instances, instead of labeling a legitimate goto statement that goes to an irrelevant code element as irrelevant, the deobfuscation module 102 may alter the goto statement so that it goes to a legitimate code element (e.g., a next legitimate code element after the irrelevant code element).

In various embodiments, the deobfuscation module 102 may maintain a list of labeled macros that are called by various functions in the program. For example, the deobfuscation module 102 may determine that a first set of macros are trivial and do not perform any meaningful operation, and therefore, are irrelevant code elements (e.g., a macro that rotates or shifts a byte, a macro that masks a certain number of bits). In contrast, the deobfuscation module 102 may determine that a second set of macros are complex and are likely necessary for the malware to perform a harmful action.

In various embodiments, the analyst 104 may provide input to customize settings associated with the functionality of the deobfuscation module 102. For example, the analyst 104 may define a preferential format in which to view the output (e.g., a textual output or a control flow graph). Moreover, the analyst 104 may define a setting that instructs the deobfuscation module 102 to output the visual representation with the irrelevant code removed and hidden from view (e.g., the text shown in FIG. 6) or to output the visual representation that demarcates or distinguishes between legitimate code elements and irrelevant code elements (e.g., the text shown in FIG. 5). The analyst 104 may also define a preferred manner in distinguishing between legitimate code elements and irrelevant code elements (e.g., visual labels, color of text, highlighting, annotations, etc.).

In various embodiments, in addition, or as an alternative, to outputting cleaned-up code, the deobfuscation module 102 may store the cleaned-up code in memory for current execution or future execution (e.g., local memory or remote memory).

### Conclusion

Although the subject matter has been described in language specific to structural features and/or methodological acts, it is to be understood that the subject matter defined in the claims is not necessarily limited to the specific features or acts described above. Rather, the specific features and acts described above are described as example forms of implementing the claims.

## Claims

1. A method comprising:
identifying (308; 706) one or more legitimate code elements (502) of an executable file (224) based at least in part on one or more assumptions;
identifying (708) one or more code elements (504, 506, 510) that interact with the one or more legitimate code elements;
labeling (710) the one or more code elements as legitimate;
labeling (310; 712) one or more other code elements that are not legitimate as irrelevant code elements; and
removing the irrelevant code elements from the executable file,
the method further comprising:
determining (802) that a return statement (514) is one of the irrelevant code statements;
mapping (804) the return statement to a location in a register (216);
determining (806) whether a value at the location in the register is read by a function; and
labeling (808) the return statement as a legitimate code element instead of an irrelevant code element if the value at the location in the register is read by a function.

2. The method of claim 1, wherein the one or more legitimate code elements comprise at least one input argument (502) to a function and the one or more assumptions include an assumption that input arguments to functions are legitimate.

3. The method of claim 1, wherein the one or more legitimate code elements comprise at least one global variable for the executable file and the one or more assumptions include an assumption that global variables are legitimate.

4. The method of claim 1, wherein the one or more legitimate code elements comprise at least one local function variable used as a parameter to a function call and the one or more assumptions include an assumption that local function variables used as parameters to function calls are legitimate.

5. The method of claim 1, wherein the one or more legitimate code elements comprise at least one local function variable that stores a return value (514) of a function call and the one or more assumptions include an assumption that local function variables that store return values of function calls are legitimate.

6. The method of claim 1, wherein the removing the irrelevant code elements comprises outputting (312) a visual representation (112; 228) of the at least the portion of the computer program including removing the irrelevant code elements from the visual representation generated based on the executable file.

7. The method of claim 6, wherein the visual representation is a textual file generated after disassembling and decompiling the executable file into a human-readable format.

8. The method of claim 6, wherein the visual representation is a control flow graph generated after disassembling and decompiling the executable file into a human-readable format.

9. The method of claim 1, wherein:
the executable file is malware;
the one or more legitimate code elements and the one or more code elements participate in executing a harmful action; and
execution of the irrelevant code elements does not cause or enable a harmful action.

10. A non-transitory computer-readable media comprising instructions that, when executed by a processor, perform the method of one of claims 1 to 9.

11. A device comprising:
one or more processors;
one or more memories;
a deobfuscation module (102), stored on the one or more memories and operable by the one or more processors, to identify at least one irrelevant code element from a plurality of code elements of an executable file to remove the at least one irrelevant code element from the executable file by performing the method of one of claims 1 to 9.

## Patentansprüche

1. Verfahren, das umfasst:
Identifizieren (308; 706) von einem oder mehreren legitimen Codeelementen (502) einer ausführbaren Datei (224), basierend zumindest zum Teil auf einer oder mehreren Annahmen;
Identifizieren (708) von einem oder mehreren Codeelementen (504, 506, 510), die mit den einen oder mehreren legitimen Codeelementen interagieren;
Kennzeichnen (710) der einen oder mehreren Codeelemente als legitim;
Kennzeichnen (310; 712) von einem oder mehreren anderen Codeelementen, die nicht legitim sind, als irrelevante Codeelemente; und
Entfernen der irrelevanten Codeelemente aus der ausführbaren Datei, wobei das Verfahren des Weiteren umfasst:
Bestimmen (802), dass eine Rückgabeanweisung (514) eine der irrelevanten Codeanweisungen ist;
Zuordnen (804) der Rückgabeanweisung zu einer Position in einem Register (216);
Bestimmen (806), ob ein Wert an der Position in dem Register von einer Funktion gelesen wird; und
Kennzeichnen (808) der Rückgabeanweisungen als ein legitimes Codeelement anstatt eines irrelevanten Codeelements, wenn der Wert an der Position in dem Register von einer Funktion gelesen wird.

2. Verfahren nach Anspruch 1, wobei die einen oder mehreren legitimen Codeelemente mindestens ein Eingabeargument (502) für eine Funktion umfassen und die einen oder mehreren Annahmen mindestens eine Annahme beinhalten, dass Eingabeargumente für Funktionen legitim sind.

3. Verfahren nach Anspruch 1, wobei die einen oder mehreren legitimen Codeelemente mindestens eine globale Variable für die ausführbare Datei umfassen und die einen oder mehreren Annahmen eine Annahme beinhalten, dass globale Variablen legitim sind.

4. Verfahren nach Anspruch 1, wobei die einen oder mehreren legitimen Codeelemente mindestens eine lokale Funktionsvariable umfassen, die als Parameter für einen Funktionsaufruf verwendet wird, und die einen oder mehreren Annahmen eine Annahme beinhalten, dass lokale Funktionsvariablen, die als Parameter für Funktionsaufrufe verwendet werden, legitim sind.

5. Verfahren nach Anspruch 1, wobei die einen oder mehreren legitimen Codeelemente mindestens eine lokale Funktionsvariable umfassen, die einen Eingabewert (514) eines Funktionsaufrufs speichert und die einen oder mehreren Annahmen eine Annahme beinhalten, dass lokale Funktionsvariablen, die Eingabewerte von Funktionsaufrufen speichern, legitim sind.

6. Verfahren nach Anspruch 1, wobei das Entfernen von irrelevanten Codeelementen das Ausgeben (312) einer visuellen Darstellung (112; 228) von zumindest dem Teil des Computerprogramms umfasst, der das Entfernen der irrelevanten Codeelemente aus der visuellen Darstellung beinhaltet, die basierend auf der ausführbaren Datei erzeugt wird.

7. Verfahren nach Anspruch 6, wobei die visuelle Darstellung eine Textdatei ist, die nach der Disassemblierung und der Dekompilierung der ausführbaren Datei in ein durch Menschen lesbares Format erzeugt wird.

8. Verfahren nach Anspruch 6, wobei die visuelle Darstellung eine Kontrollflussgrafik ist, die nach der Disassemblierung und der Dekompilierung der ausführbaren Datei in ein durch Menschen lesbares Format erzeugt wird.

9. Verfahren nach Anspruch 1, wobei:
die ausführbare Datei Malware ist;
die einen oder mehreren legitimen Codeelemente und die einen oder mehreren Codeelemente an der Ausführung einer schädlichen Aktion beteiligt sind; und
die Ausführung der irrelevanten Codeelemente keine schädliche Aktion verursacht oder aktiviert.

10. Nicht-flüchtiges computerlesbares Medium umfassend Befehle, die bei Ausführung durch einen Prozessor das Verfahren nach einem der Ansprüche 1 bis 9 durchführen.

11. Vorrichtung, umfassend:
einen oder mehrere Prozessoren;
einen oder mehrere Speicher;
ein Deobfuskationsmodul (102), das in den einen oder mehreren Speichern gespeichert ist und von den einen oder mehreren Prozessoren dazu betrieben werden kann, mindestens ein relevantes Codeelement aus einer Vielzahl von Codeelementen einer ausführbaren Datei zu identifizieren, um das mindestens eine irrelevante Codeelement aus der ausführbaren Datei durch Durchführung des Verfahrens nach einem der Ansprüche 1 bis 9 zu entfernen.

## Revendications

1. Procédé comprenant :
l'identification (308 ; 706) d'un ou plusieurs éléments de code légitimes (502) dans un fichier exécutable (224) sur la base au moins en partie d'une ou plusieurs suppositions,
l'identification (708) d'un ou plusieurs éléments de code (504, 506, 510) qui interagissent avec le ou les éléments de code légitimes,
le marquage (710) du ou des éléments de code comme étant légitimes,
le marquage (310 ; 712) d'un ou de plusieurs autres éléments de code qui ne sont pas légitimes comme étant des éléments de code non pertinents, et
la suppression des éléments de code non pertinents du fichier exécutable,
le procédé comprenant en outre :
la détermination (802) de ce qu'une instruction de renvoi (514) est l'une des instructions de code non pertinentes,
le mappage (804) de l'instruction de renvoi sur un emplacement dans un registre (216),
la détermination (806) de ce que la valeur située à l'emplacement dans le registre est lue par une fonction, et
le marquage (808) de l'instruction de renvoi comme étant un élément de code légitime plutôt qu'un élément de code non pertinent si la valeur située à l'emplacement dans le registre est lue par une fonction.

2. Procédé selon la revendication 1, dans lequel le ou les éléments de code légitimes comprennent au moins un argument d'entrée (502) vers une fonction et la ou les suppositions incluent une supposition telle que les arguments d'entrée vers des fonctions sont légitimes.

3. Procédé selon la revendication 1, dans lequel le ou les éléments de code légitimes comprennent au moins une variable globale pour le fichier exécutable et la ou les suppositions incluent une supposition telle que les variables globales sont légitimes.

4. Procédé selon la revendication 1, dans lequel le ou les éléments de code légitimes comprennent au moins une variable de fonction locale utilisée en tant que paramètre vers un appel de fonction et la ou les suppositions incluent une supposition telle que les variables de fonctions locales utilisées en tant que paramètres vers des appels de fonction sont légitimes.

5. Procédé selon la revendication 1, dans lequel le ou les éléments de code légitimes comprennent au moins une variable de fonction locale qui stocke une valeur de renvoi (540) d'un appel de fonction et la ou les suppositions incluent une supposition telle que des variables de fonctions locales qui stockent des valeurs de renvoi d'appels de fonctions sont légitimes.

6. Procédé selon la revendication 1, dans lequel la suppression des éléments de code non pertinents comprend la délivrance en sortie (312) d'une représentation visuelle (112 ; 228) au moins de la partie de programme informatique incluant la suppression des éléments de code non pertinents de la représentation visuelle générée sur la base du fichier exécutable.

7. Procédé selon la revendication 6, dans lequel la représentation visuelle est un fichier de texte généré après le désassemblage et la décompilation du fichier exécutable en un format pouvant être lu par un être humain.

8. Procédé selon la revendication 6, dans lequel la représentation visuelle est un graphique de flux de commandes généré après le désassemblage et la décompilation du fichier exécutable en un format pouvant être lu par un être humain.

9. Procédé selon la revendication 1, dans lequel :
le fichier exécutable est un logiciel malveillant,
le ou les éléments de code légitimes et le ou les éléments de code participent à l'exécution d'une action nocive, et
l'exécution des éléments de code non pertinents ne provoque ni ne valide une action nocive.

10. Support pouvant être lu par ordinateur non transitoire comprenant des instructions qui, lorsqu'elles sont exécutées par un processeur, réalisent le procédé conforme à l'une des revendications 1 à 9.

11. Dispositif comprenant :
un ou plusieurs processeurs,
une ou plusieurs mémoires,
un module de suppression d'obscurcissement (102) stocké sur la ou les mémoires et pouvant être mis en oeuvre par le ou les processeurs afin d'identifier au moins un élément de code non pertinent à partir d'une pluralité d'éléments de code dans un fichier exécutable afin de supprimer le ou les éléments de code non pertinents du fichier exécutable en réalisant le procédé conforme à l'une des revendications 1 à 9.
